# FASCICULE DE BREVET EUROPEEN

(11) **EP 0 657 350 B1**
(45) Date de publication et mention de la délivrance du brevet: **23.07.1997**
(21) Numéro de dépôt: 94402393.6
(22) Date de dépôt: 24.10.1994
(51) Int. Cl.: B64D 31/00, G05D 1/00

(54) **Dispositif pour la commande des manettes de gaz contrôlant deux moteurs d'un même aérodyne**
Handgashebel zur Regelung beider Motoren eines Flugzeugs
Manual throttle control device for operating both enzymes of an aircraft

(30) Priorité: 13.12.1993 FR 9315050
(43) Date de publication de la demande: 14.06.1995
(73) Titulaire: SEXTANT AVIONIQUE, F-92366 Meudon la Foret Cédex (FR)
(72) Inventeur: Ledoux, Jean-Pierre, F-91370 Verrieres le Buisson (FR); Cognard, Alain, F-92160 Antony (FR); Bedoya, Claude, F-78180 Montigny Le Bretonneux (FR)
(74) Mandataire: de Saint-Palais, Arnaud Marie

(56) Documents cités:
- WO-A-84/01446
- DE-A- 3 336 546
- US-A- 4 805 396

## Description

La présente invention concerne un dispositif pour la commande des manettes de gaz contrôlant un couple de moteurs d'un aérodyne, par exemple les deux moteurs d'un avion bimoteur.

D'une manière générale, on sait que dans les systèmes de commande utilisés à l'heure actuelle, les manettes de gaz sont couplées à un servomoteur respectif associé à un calculateur de contrôle automatique par l'intermédiaire d'une liaison débrayable.

Il est clair que l'usage de deux manettes pour deux moteurs respectifs implique une multiplication par deux des systèmes électromécaniques et donc un accroissement notable de l'encombrement et du coût de l'ensemble.

Pour réduire ces inconvénients, on a déjà proposé, notamment par la demande PCT WO 84/01446, d'effectuer la commande de deux manettes de gaz à l'aide d'un seul servomoteur tout en garantissant, d'une part l'indépendance des deux manettes et, d'autre part le niveau de sécurité requis pour le contrôle automatique de la vitesse avion.

L'invention a plus particulièrement pour objet un dispositif pour la commande des gaz de deux moteurs d'un même aérodyne, ce dispositif faisant intervenir un organe d'entraînement monté rotatif autour d'un axe fixe et entraîné en rotation grâce à un servomoteur commandé par un calculateur de contrôle automatique de la vitesse de l'avion, deux manettes respectivement solidaires de deux éléments annulaires montés rotatifs autour dudit axe, de part et d'autre de l'organe d'entraînement et couplés à ce dernier par l'intermédiaire d'un coupleur débrayable, et deux capteurs de position angulaire respectivement associés aux deux éléments annulaires, ces deux capteurs étant respectivement connectés au circuit de commande de l'aérodyne.

Selon l'invention, ce dispositif est caractérisé en ce que l'organe d'entraînement comprend deux manchons cylindriques coaxiaux solidarisés l'un à l'autre dans leur partie médiane grâce à une entretoise annulaire, le manchon de plus petit diamètre servant de palier pour le montage rotatif de l'organe d'entraînement autour du susdit axe, tandis que le manchon de plus grand diamètre comprend des moyens d'entraînement en rotation à partir du servomoteur, en ce que les éléments annulaires comprennent chacun une portion annulaire qui s'étend axialement dans l'une des cavités annulaires formée entre les deux manchons cylindriques de part et d'autre de l'entretoise, et en ce que ladite portion annulaire comprend un électroaimant, apte à exercer une traction sur une armature conçue de manière à agir sur des disques d'embrayage coaxiaux respectivement solidaires en rotation de la portion annulaire et d'au moins l'un desdits manchons cylindriques, mais axialement mobiles vis-à-vis de ceux ci, ledit électroaimant, ladite armature et les susdits disques constituant un coupleur.

Un mode d'exécution de l'invention sera décrit ci-après à titre d'exemple non limitatif, avec référence aux dessins annexés dans lesquels :
La figure 1 est une coupe axiale du mécanisme d'un dispositif pour la commande de deux manettes selon l'invention ;
La figure 2 est un schéma synoptique du circuit de surveillance et de commande des liaisons débrayables du dispositif de la figure 1.

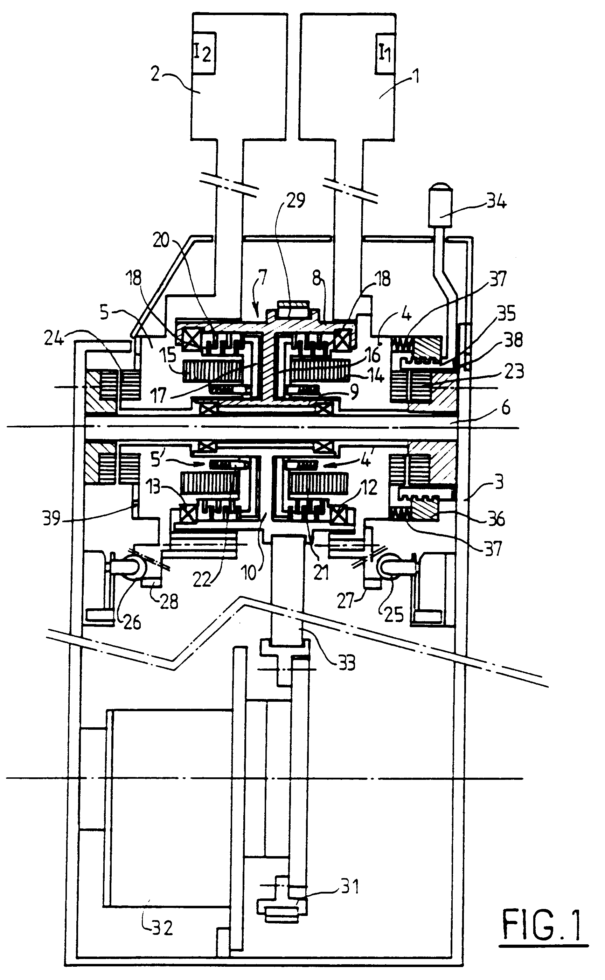

Dans l'exemple représenté sur la figure 1, la commande des gaz de l'avion est assurée par deux manettes 1, 2 portées par une console 3 située par exemple entre les sièges du pilote et du copilote dans le poste de pilotage de l'avion.

Chacune de ces manettes 1, 2 est solidarisée, par son extrémité inférieure, à un élément annulaire 4, 5 monté rotatif autour d'un axe horizontal 6 monté fixement dans la console 3.

Les deux éléments annulaires 4, 5 sont disposés de part et d'autre d'un organe d'entraînement 7 monté rotatif sur l'arbre 6.

Dans cet exemple, l'organe d'entraînement 7 est formé de deux manchons cylindriques coaxiaux 8, 9 solidarisés l'un à l'autre dans leur partie médiane grâce à une entretoise annulaire 10.

Cette entretoise 10 délimite, entre les deux manchons 8, 9, deux cavités cylindriques coaxiales dans chacune desquelles s'engage une portion annulaire 4', 5' d'un élément annulaire respectif 4, 5.

Le manchon, de plus petit diamètre, 9 est monté rotatif sur l'axe 6 par l'intermédiaire de paliers à roulement à billes ; sa surface cylindrique extérieure sert, quant à elle, à palier aux éléments annulaires 4, 5.

Le montage rotatif des éléments annulaires 4, 5 sur l'organe d'entraînement 7 est en outre complété par des roulements à billes 12, 13 disposés entre la surface extérieure des éléments annulaires 4, 5 et la surface intérieure du manchon de plus grand diamètre 8.

Chacun des éléments annulaires comprend une cavité coaxiale logeant un bobinage 14, 15, l'ensemble constituant l'électroaimant d'un coupleur électromagnétique dont l'armature mobile 16, 17 est constituée par une rondelle munie d'un collet extérieur, logée entre l'élément 4, 5 et l'entretoise annulaire 10.

La surface cylindrique extérieure de chacune des portions annulaires 4, 5 présente des cannelures axiales et porte des disques de friction coaxiaux 18, mobiles axialement mais solidaires en rotation de ladite portion (grâce à des crantages formés dans la bordure intérieure des disques 18 qui s'engagent dans les cannelures).

De même, la surface cylindrique intérieure du manchon 8 présente des cannelures axiales servant à retenir en rotation des disques de friction 20 disposés coaxialement en alternance avec les disques de friction 18.

L'armature 16, 17 est conçue de manière à ce qu'à l'état excité de la bobine 14, 15, le collet vienne serrer les disques de friction 18, 20 les uns contre les autres en réalisant ainsi une solidarisation de l'organe d'entraînement 7 et de l'élément annulaire 4, 5 (embrayage).

Par contre, à l'état désexcité de la bobine 14, 15, l'armature 16, 17 est repoussée contre l'entretoise 10 grâce à des poussoirs axiaux 21, 22 sollicités par ressorts prévus dans les éléments annulaires 4, 5. Dans cet état, les disques de friction 18, 20 ne sont plus serrés les uns contre les autres et n'assurent plus de transmission entre l'organe d'entraînement 7 et l'élément annulaire 4, 5 concerné.

La position angulaire des éléments annulaires 4, 5 (et donc des manettes) est détectée par deux capteurs respectifs coaxiaux 23, 24 solidaires du bâti de la console 3.

Cette détection est en outre complétée par au moins deux microinterrupteurs fin de course 25, 26 actionnés par deux cames 27, 28 respectivement fixées sur les deux éléments annulaires 4, 5. Ces microinterrupteurs 25, 26 ont plus particulièrement pour but de détecter les positions de butées fin de course (par exemple la position plein réduit) des manettes 1, 2.

La surface extérieure du manchon de plus grand diamètre 8 est en outre conformée dans sa région médiane de manière à assurer la fonction d'une poulie à gorge 29, couplée à la poulie à gorge 31 d'un servomoteur 32, par l'intermédiaire d'une courroie 33.

Ce servomoteur 32 est lui-même commandé par un système de commande des gaz de l'avion qui comprend habituellement un calculateur de contrôle automatique de vitesse avion.

L'ensemble rotatif comprenant l'organe d'entraînement 7 et les deux éléments annulaires 4, 5 portant les manettes 1, 2 peut être soumis à un couple de friction d'amplitude réglable grâce à une manette 34.

Dans cet exemple, cette manette 34 est montée sur une douille cylindrique 35 montée rotative coaxialement à l'axe 6 autour du capteur 23.

Sur la surface extérieure filetée de cette douille 35 vient se visser un écrou 36 mobile axialement mais retenu fixement en rotation. Cet écrou 36 prend appui, axialement sur l'ensemble rotatif grâce à des ressorts 37.

Le flanc radial de la douille 35, situé du côté opposé à l'ensemble rotatif, vient porter sur une rondelle de friction coaxiale 38. De même, une rondelle de friction coaxiale 39 est également prévue entre le flanc radial extérieur de l'élément annulaire 5 et une couronne de butée fixement solidaire de la console 3.

Le fonctionnement du dispositif précédemment décrit est alors le suivant :

En fonctionnement manuel, les bobines 14 et 15 sont à l'état désexcité et en conséquence les éléments annulaires 4, 5 sont à l'état débrayé. Les deux manettes de gaz 1, 2 peuvent être alors positionnées librement et indépendamment par l'équipage. Les informations de position des manettes sont transmises au système de commande des gaz grâce aux capteurs 23, 24.

En fonctionnement automatique, les deux bobines 14, 15 sont excitées de manière à assurer un couplage, par le biais des disques de friction 18, 20, entre l'organe d'entraînement 7 et les éléments annulaires 4, 5. De ce fait, au moment de l'embrayage, les deux manettes de gaz 1, 2 sont couplées au servomoteur 32 tout en conservant leur position initiale. Les manettes sont ensuite actionnées par le servomoteur 32 conformément aux ordres qu'il reçoit du calculateur.

Si, après l'embrayage, l'équipage désire modifier la position relative des deux manettes de gaz 1, 2, il peut l'effectuer en surpassant le couple magnétique appliqué par les deux coupleurs.

Dans le cas d'une panne d'un des moteurs de l'avion, la manette de gaz 1, 2 correspondant à ce moteur est mise en position plein réduit par l'équipage, position qui est détectée par le micro-interrupteur correspondant 25, 26. Ce micro-interrupteur 25, 26 agit alors de manière à provoquer la désexcitation de la bobine 14, 15 du coupleur magnétique correspondant qui passe alors à l'état débrayé.

En conséquence, en fonctionnement automatique, seule la manette de gaz 1, 2 correspondant au moteur sain est couplée au servomoteur 32, ce qui permet le contrôle automatique de l'avion avec un seul moteur.

Bien entendu, si l'équipage désire débrayer les deux manettes 1, 2, il peut effectuer ce débrayage en actionnant un interrupteur de débrayage rapide prévu sur la poignée de chacune des manettes 1, 2.

Grâce à la manette 34, le pilote peut régler le couple de friction exercé sur l'ensemble rotatif et donc la force de réaction que les manettes de gaz 1, 2 opposent à l'action du pilote.

En effet, la rotation de la manette 34 provoque un déplacement axial de la vis 36 et donc une variation de l'effort exercé entre la manette 34 et l'ensemble mobile par le biais des ressorts 37. Il en résulte une variation des forces de frottement exercées sur l'ensemble mobile par les rondelles de friction 38, 39.

Il convient de préciser que la variation des forces de frottement exercées par les rondelles 38, 39 est due au fait que l'ensemble rotatif présente une légère mobilité axiale de sorte que les efforts exercés par les ressorts 37 sur l'élément annulaire 4, se répercutent sur l'organe d'entraînement 7 et sur l'élément annulaire 5 grâce à la présence des roulements à billes 12, 13 (qui sont agencés de manière à retransmettre les contraintes axiales). Ces efforts sont contenus par les rondelles de friction 38, 39 qui prennent appui sur la structure de la console 3.

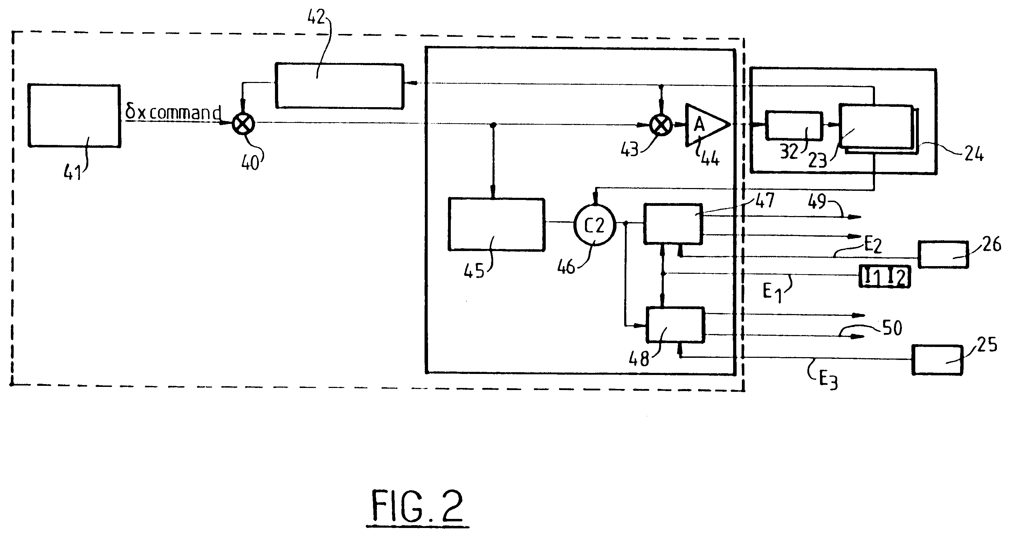

Le dispositif précédemment décrit peut être connecté à un circuit de commande et de surveillance du type de celui qui se trouve illustré sur la figure 2.

Dans cet exemple, le servomoteur 32 est commandé par un circuit d'asservissement faisant intervenir :
- un premier soustracteur 40 qui reçoit un signal de commande δₓ émanant d'un calculateur de contrôle automatique de vitesse avion 41 ainsi qu'un signal représentatif de la position initiale du servomoteur qui est fourni par une mémoire 42 couplée au capteur 23,
- un second soustracteur 43 qui reçoit, d'une part un signal émanant du capteur 23 représentatif de la position angulaire du servomoteur 32 et, d'autre part un signal de commande émanant du soustracteur 40 (ce signal tenant compte de la position initiale des manettes),
- un amplificateur de puissance 44 dont l'entrée est connectée à la sortie du soustracteur 43 et dont la sortie alimente le servomoteur 32.

La fonction surveillance est quant à elle assurée au moyen d'un dispositif faisant intervenir :
- un circuit de simulation 45 de la boucle d'asservissement 43, 44, 32, 23, qui délivre une information relative à la position angulaire du servomoteur,
- un comparateur 46 qui compare la position angulaire déterminée par le circuit de simulation à la position réelle du capteur 24, et
- deux circuits logiques 47, 48 recevant chacun l'information délivrée par le soustracteur, ces circuits comprenant chacun des moyens (flèches 49, 50) permettant de débrayer les manettes 1, 2 lorsque le comparateur 46 détecte une discordance entre ses deux signaux d'entrée.

Les deux circuits logiques 47, 48 comprennent en outre une entrée E₁ connectée aux interrupteurs de débrayage I₁, I₂ prévus sur les deux manettes 1, 2 et deux autres entrées E₂, E₃ respectivement connectées aux microinterrupteurs fin de course 25, 26, de manière à permettre le débrayage d'une manette 1, 2 lorsque celle-ci est amenée dans une position hors de son domaine d'utilisation par le pilote ou par le servomoteur.

Grâce à ces dispositions, on satisfait aux conditions de sécurité habituellement requises pour le contrôle automatique de la vitesse avion.

## Revendications

1. Dispositif pour la commande des gaz de deux moteurs d'un même aérodyne, ce dispositif faisant intervenir un organe d'entraînement (7) monté rotatif autour d'un axe fixe (6) et entraîné en rotation grâce à un servomoteur (32) commandé par un calculateur (41) de contrôle automatique de la vitesse de l'avion, deux manettes (1, 2) respectivement solidaires de deux éléments annulaires (4, 5) montés rotatifs autour dudit axe, de part et d'autre de l'organe d'entraînement et couplés à ce dernier par l'intermédiaire d'un coupleur débrayable, et deux capteurs de position angulaire (23, 24) respectivement associés aux deux éléments annulaires, ces deux capteurs (23, 24) étant respectivement connectés au circuit de commande de l'aérodyne,
caractérisé :
- en ce que l'organe d'entraînement comprend deux manchons cylindriques coaxiaux (8, 9) solidarisés l'un à l'autre dans leur partie médiane grâce à une entretoise annulaire (10), le manchon de plus petit diamètre (9) servant de palier pour le montage rotatif de l'organe d'entraînement (7) autour du susdit axe (6) tandis que le manchon de plus grand diamètre (8) comprend des moyens d'entraînement (29) en rotation à partir du servomoteur (32),
- en ce que les éléments annulaires (4, 5) comprennent chacun une portion annulaire qui s'étend axialement dans l'une des cavités annulaires formée entre les deux manchons cylindriques (8, 9) de part et d'autre de l'entretoise (10),
- et en ce que ladite portion annulaire comprend un électroaimant apte exercer une traction sur une armature (16) conçue de manière à agir sur des disques d'embrayage coaxiaux (18, 20) respectivement solidaires en rotation de la portion annulaire et d'au moins l'un desdits manchons cylindriques (8, 9), mais axialement mobiles vis-à-vis de ceux-ci, ledit électroaimant, ladite armature (16) et les susdits disques (19, 20) constituant un coupleur.

2. Dispositif selon la revendication 1,
caractérisé :
- en ce qu'il comprend en outre une manette (34) montée sur une douille cylindrique (35) montée rotative coaxialement à l'axe (6),
- en ce que sur la surface extérieure filetée de cette douille (35) est vissé un écrou (36) mobile axialement mais retenu fixement en rotation,
- et en ce que cet écrou prend appui sur l'ensemble mobile comprenant les éléments annulaires et l'organe d'entraînement (7) par l'intermédiaire de ressorts de manière à exercer un couple de friction réglable sur ledit ensemble mobile.

3. Dispositif selon l'une des revendications précédentes,
caractérisé en ce que le servomoteur (32) est commandé par un circuit d'asservissement faisant intervenir :
- un premier soustracteur (40) qui reçoit un signal de commande (δx) émanant d'un calculateur de contrôle automatique de vitesse avion (41) ainsi qu'un signal représentatif de la position initiale des manettes qui est fourni par une mémoire (42) couplée aux capteurs (23, 24),
- un second soustracteur (43) qui reçoit, d'une part un signal émanant des capteurs (23, 24) représentatif de la position angulaire des manettes (1, 2) et, d'autre part un signal de commande émanant du soustracteur (40) (ce signal tenant compte de la position initiale des manettes),

4. Dispositif selon la revendication 3,
caractérisé en ce qu'il comprend en outre un dispositif de surveillance faisant intervenir :
- un circuit de simulation (45) de la boucle d'asservissement (43, 44, 32, 23, 24) qui délivre une information relative à la position angulaire des manettes,
- un comparateur (46) qui compare la position angulaire déterminée par le circuit de simulation à la position réelle des capteurs (23, 24), et
- deux circuits logiques (47, 48) recevant chacun l'information délivrée par le soustracteur, ces circuits comprenant chacun des moyens (flèches 49, 50) permettant de débrayer les manettes (1, 2) lorsque le comparateur (46) détecte une discordance entre ses deux signaux d'entrée.

5. Dispositif selon l'une des revendications précédentes,
caractérisé en ce que les coupleurs électromagnétiques sont commandables directement au moyen d'interrupteurs (I₁, I₂) prévus sur les deux manettes (1, 2).

## Claims

1. A throttle control device controlling two engines of a same aerodyne, said device using a drive mechanism (7) mounted rotatably about a fixed axis (6) and rotated by means of a servomotor (32) controlled by a computer (41) ensuring automatic flight velocity control for the aircraft, two levers (1, 2) respectively integral with two annular elements (4, 5) mounted rotatably about said axis, on both sides of the drive mechanism and coupled therewith by means of a disengageable coupler, and two angular position sensors (23, 24) respectively associated with said two annular elements, these two sensors (23, 24) being respectively connected to the throttle control circuit of said aircraft.
characterized in that the drive mechanism comprises two coaxial cylindrical sleeves (8, 9) integral with one another in their middle part by way of an annular strut (10), the sleeve of smallest diameter (9) serving as a bearing for the rotary mounting of the drive mechanism (7) about said axis (6) while the sleeve of largest diameter (8) comprises a means (29) for rotating from the servomotor (32),
in that the annular elements (4, 5) each comprise an annular portion extending axially into one of the annular cavities formed between the two cylindrical sleeves (8, 9) on either side of the strut (10),
and in that said annular portion comprises an electromagnet capable of exerting traction on an armature (16) designed to act upon coaxial clutch disks (18, 20) respectively interdependent in rotation with the annular portion and with at least one of said cylindrical sleeves (8, 9), but axially mobile in relation to the latter, said electromagnet, said armature (16) and said disks (19, 20) forming a coupler.

2. The device as claimed in claim 1,
characterized in that it further comprises a lever (34) mounted on a cylindrical socket (35) mounted rotatably coaxially with the axis (6),
in that on the threaded outer surface of this socket (35) is screwed a nut (36) that is axially mobile though fixedly prevented from rotating,
and in that this nut axially rests against the mobile assembly comprising the annular elements and the drive mechanism (7) by means of springs so as to exert an adjustable friction torque on said mobile assembly.

3. The device as claimed in one of the preceding claims,
characterized in that the servomotor (32) is controlled by a loop control circuit using:
- a first subtracter (40) which receives a control signal (δx) from a computer (41) ensuring automatic flight velocity control for the aircraft and a signal representing the initial position of the levers and which is provided by a memory (42) coupled to the sensors (23, 24),
- a second subtracter (43) which receives, on the one hand, a signal coming from said sensors (23, 24) and representing the angular position of the levers (1, 2), and, on the other hand, a control signal from said subtracter (40) (this signal taking into account the initial position of said levers).

4. The device as claimed in claim 3,
characterized in that it further comprises a monitoring device using:
- a circuit (45) simulating the control loop (43, 44, 32, 23, 24) which issues information concerning the angular position of the levers,
- a comparator (46) which compares said angular position determined by the simulating circuit with the actual position of the sensors (23, 24), and
- two logic circuits (47, 48), each receiving data provided by the subtracter, these circuits each comprising a means (arrows 49, 50) enabling said levers (1, 2) to be disengaged when said comparator (46) detects an inconsistency between its two input signals.

5. The device as claimed in one of the preceding claims,
characterized in that the electromagnetic couplers can be controlled directly by means of switches (I₁, I₂) provided on the two levers 1, 2).

## Patentansprüche

1. Vorrichtung für die Geschwindigkeitssteuerung zweier Motoren eines Luftfahrzeugs, wobei diese Vorrichtung ein Antriebsorgan (7), das um eine feste Achse (6) drehbar montiert ist und mittels eines von einem Rechner (41) für die automatische Steuerung der Flugzeuggeschwindigkeit gesteuerten Servomotors (32) in Drehung versetzt wird, zwei Hebel (1, 2), die je mit einem von zwei ringförmigen Elementen (4, 5) fest verbunden sind, die um die Achse drehbar zu beiden Seiten des Antriebsorgans montiert und mit dem Antriebsorgan über einen ausschaltbaren Koppler gekoppelt sind, und zwei den beiden ringförmigen Elementen zugeordnete Winkelmeßsonden (23, 24) aufweist, die je mit der Steuerschaltung des Luftfahrzeugs verbunden sind,
dadurch gekennzeichnet,
- daß das Antriebsorgan zwei koaxiale zylindrische Muffen (8, 9) aufweist, die in ihrem mittleren Bereich mit Hilfe eines ringförmigen Stegs (10) miteinander verbunden sind, wobei die Muffe (9) kleineren Durchmessers als Lager für die um die Achse (6) drehbare Montage des Antriebsorgans (7) dient, während die Muffe (8) größeren Durchmessers Mittel (29) zum Drehantrieb ausgehend vom Servomotor (32) aufweist,
- daß die ringförmigen Elemente (4, 5) je einen ringförmigen Abschnitt aufweisen, der sich axial in einen der ringförmigen Hohlräume erstreckt, die zwischen den beiden zylindrischen Muffen (8, 9) zu beiden Seiten des Stegs (10) gebildet werden,
- und daß der ringförmige Abschnitt einen Elektromagneten aufweist, der einen Zug auf einen Magnetanker (16) ausüben kann, welcher auf koaxiale Kupplungsscheiben (18, 20) einwirkt, die je mit dem ringförmigen Abschnitt und mindestens einer der zylindrischen Muffen (8, 9) drehfest verbunden, aber diesen gegenüber axial beweglich sind, wobei der Elektromagnet, der Magnetanker (16) und die Scheiben (19, 20) einen Koppler bilden.

2. Vorrichtung nach Anspruch 1, dadurch gekennzeichnet,
- daß sie weiter einen Hebel (34) aufweist, der auf eine zylindrische Buchse (35) montiert ist, die koaxial zur Achse (6) drehbar angeordnet ist,
- daß auf die mit Gewinde versehene Außenfläche dieser Buchse (35) eine Mutter (36) geschraubt ist, die axial beweglich ist, aber in Drehung festgehalten wird,
- und daß diese Mutter mittels Federn auf der die ringförmigen Elemente und das Antriebsorgan (7) enthaltenden beweglichen Einheit aufliegt, um ein regelbares Reibungsmoment auf diese bewegliche Einheit auszuüben.

3. Vorrichtung nach einem der vorhergehenden Ansprüche, dadurch gekennzeichnet, daß der Servomotor (32) von einem Regelkreis gesteuert wird, der aufweist:
- einen ersten Subtrahierer (40), der ein von einem Rechner (41) zur automatischen Steuerung der Flugzeuggeschwindigkeit kommendes Steuersignal (δx) sowie ein für die ursprüngliche Position der Hebel repräsentatives Signal empfängt, das von einem mit den Meßsonden (23, 24) gekoppelten Speicher (42) geliefert wird,
- einen zweiten Subtrahierer (43), der einerseits ein von den Meßsonden (23, 24) kommendes und für die Winkelposition der Hebel (1, 2) repräsentatives Signal und andererseits ein vom Subtrahierer (40) kommendes Steuersignal empfängt (wobei dieses Signal die ursprüngliche Position der Hebel berücksichtigt).

4. Vorrichtung nach Anspruch 3, dadurch gekennzeichnet, daß sie weiter eine Überwachungsvorrichtung aufweist, die verwendet:
- eine Simulierschaltung (45) der Regelschleife (43, 44, 32, 23), die eine Information in Bezug auf die Winkelposition der Hebel liefert,
- einen Komparator (46), der die von der Simulierschaltung bestimmte Winkelposition mit der tatsächlichen Position der Meßsonden (23, 24) vergleicht,
- und zwei logische Schaltkreise (47, 48), die je die vom Subtrahierer gelieferte Information empfangen, wobei diese Schaltkreise je Mittel (Pfeile 49, 50) aufweisen, die die Ausschaltung der Hebel (1, 2) ermöglichen, wenn der Komparator (46) eine Nichtübereinstimmung zwischen seinen beiden Eingangssignalen erfaßt.

5. Vorrichtung nach einem der vorhergehenden Ansprüche, dadurch gekennzeichnet, daß die elektromagnetischen Koppler direkt mit Hilfe von Schaltern (I₁, I₂) gesteuert werden können, die auf den beiden Hebeln (1, 2) vorgesehen sind.
